# EUROPÄISCHE PATENTANMELDUNG

(11) **EP 2 660 032 A1**
(43) Veröffentlichungstag der Anmeldung: **06.11.2013**
(21) Anmeldenummer: 12166375.1
(22) Anmeldetag: 02.05.2012
(51) Int. Cl.: B29C 44/34, B29C 44/56

(54) **VERFAHREN ZUR HERSTELLUNG EINES VERBUNDKÖRPERS UMFASSEND EIN MIT EINEM HOHLKÖRPER KRAFTSCHLÜSSIG VERBUNDENES PARTIKELSCHAUM-FORMTEIL**

(71) Anmelder: BASF SE, 67056 Ludwigshafen (DE)
(72) Erfinder: Lambert, Jürgen, 67377 Gommersheim (DE); Bartl, Jürgen, 67063 Ludwigshafen (DE); Albert, Tim, 53332 Bornheim (DE); Obermann, Christian, 67346 Speyer (DE); Buscher, Markus, 67150 Niederkirchen (DE)

(57) **Zusammenfassung**

Die Erfindung betrifft ein Verfahren zur Herstellung eines Verbundkörpers umfassend einen Grundkörper und eine mit dem Grundkörper verbundene Außenhülle, wobei der Grundkörper ein aus vorgeschäumten Schaumpartikeln erhältliches Partikelschaum-Formteil umfaßt und die Außenhülle einen einseitig oder an zwei gegenüberliegenden Seiten offenen Hohlkörper umfaßt, und wobei zwischen dem Partikelschaum-Formteil und dem Hohlkörper eine kraftschlüssige Verbindung ausgebildet wird. Ferner betrifft die Erfindung den nach diesen Verfahren erhältlichen Verbundkörper selbst, dessen Verwendung und ihn enthaltende Gegenstände.

## Beschreibung

Die Erfindung betrifft ein Verfahren zur Herstellung eines Verbundkörpers umfassend einen Grundkörper und eine mit dem Grundkörper verbundene Außenhülle, wobei der Grundkörper ein aus vorgeschäumten Schaumpartikeln erhältliches Partikelschaum-Formteil umfaßt und die Außenhülle einen einseitig oder an zwei gegenüberliegenden Seiten offenen Hohlkörper umfaßt. Ferner betrifft die Erfindung den nach diesen Verfahren erhältlichen Verbundkörper selbst, dessen Verwendung und ihn enthaltende Gegenstände.

Partikelschaum-Formteile werden aufgrund ihrer Elastizität und ihres geringen Gewichts in vielfältiger Weise und für unterschiedlichste Anwendungen eingesetzt.

So werden beispielsweise aus expandierten Polypropylen-Schaumpartikeln Partikelschaum-Formteile hergestellt, die hauptsächlich als Verpackungsmaterial für stoßempfindliche Güter oder im Fahrzeugbau als Leichtbauwerkstoff zur Gewichtsreduktion eingesetzt werden. Die hervorragenden Energieabsorptionseigenschaften und die hohen Rückstelleigenschaften dieses Materials verbessern die Fahrzeugsicherheit und tragen zur Reduzierung des Fahrzeuggewichtes bei. Partikelschaum-Formteile aus expandierten Polypropylen-Schaumpartikeln sind darüber hinaus umweltfreundlich und können in der Regel problemlos rezykliert oder wiederverwendet werden.

Oftmals werden die Partikelschaum-Formteile mit anderen Materialien zu Verbundkörpern weiterverarbeitet, in der Regel um die genannten vorteilhaften Eigenschaften des Schaumstoffs mit bestimmten Eigenschaften des anderen Materials zu kombinieren.

Dementsprechend sind auch Verfahren zur Herstellung von Verbundbauteilen umfassend eine Außenhülle und einen mit der Außenhülle verbundenen Grundkörper aus einem Partikelschaumstoff bekannt.

So beschreibt beispielsweise die DE 199 08 486 A1 Verfahren zur Kaschierung textiler Flächengebilde auf expandierendem Partikelschaum oder geschäumten Formteilen. Dabei werden die textilen Flächengebilde in ein Formwerkzeug eingelegt und anschließend entweder expandierbare Polymerpartikel eingebracht und durch Heißdampf verschäumt, wobei gleichzeitig die Anbindung des Schaums an das textile Flächengebilde erfolgt, oder es wird zuerst ein geschäumtes Formteil hergestellt und anschließend, beispielsweise in einem Formwerkzeug, unter erhöhtem Druck und Temperatur das textile Flächengewebe aufkaschiert.

Die DE 40 24 274 A1 offenbart Verfahren zur Herstellung eines gepolsterten Fahrzeug-Ausstattungsteils, bei dem ein vorgefertigte Trägerteil sowie eine Oberflächenfolie in jeweils eine Formhälfte eines Formwerkzeugs eingelegt werden, und dann zwischen diese beiden Schichten ein aufschäumbares Polypropylen eingebracht wird. Unter Wärme- und Druckeinwirkung wird dann durch Aufschäumen des Polypropylens eine mit den beiden Schichten fest verbundene Polsterschicht ausgebildet.

Die in den beiden Schriften beschriebenen Verfahren sind prinzipiell auf die Herstellung flächiger Bauteile begrenzt. Hohlkörper können nach diesen Verfahren nicht zu einem Verbund mit einem Partikelschaum-Formteil verarbeitet werden.

Die DE 10 2004 013 370 B4 offenbart ein energieabsorbierendes Bauteil, bei der ein blasgeformter Hohlkörper aus thermoplastischem Kunststoff eine Schaumstofffüllung allseitig umschließt. Als bevorzugte Schaumstofffüllung werden Partikelschäume genannt, insbesondere in Form von Minibeads (d.h. vorgeschäumter Schaumpartikel). Als Herstellverfahren wird das Einbringen dieser Minibeads während der Herstellung des Hohlkörpers als Blasformteil beschrieben, wobei die Minibeads entweder unter Druck lediglich komprimiert oder aber auch unter Einwirkung von beispielsweise Heißdampf miteinander sowie ggf. auch mit der Innenwandung des Hohlkörpers verschweißt werden können. Bei diesem Verfahren ist jedoch aufgrund der nach seiner Herstellung stattfindenden Abkühlung des Bauteils und der damit verbundenen Schwindung der Minibeads bzw. des Partikelschaums eine zumindest teilweise Ablösung der Schaumstofffüllung von der Innenwandung des Hohlkörpers, und/oder eine unerwünschte Hohlraumbildung innerhalb der Minibeads bzw. des Partikelschaums, und/oder ein unerwünschter Bauteilverzug nicht zu vermeiden.

Der vorliegenden Erfindung lag daher die Aufgabe zugrunde, Verfahren zur Herstellung eines Verbundkörpers umfassend einen mit Partikelschaum gefüllten Hohlkörper bereit zu stellen, wobei keine unerwünschten Ablösungen des Partikelschaums von der Hohlkörperwand und keine unerwünschte Hohlraumbildung im Partikelschaum auftritt, so daß durch die stoßenergieabsorbierenden und elastischen Rückstelleigenschaften des Partikelschaums der Hohlkörper über den gesamten gewünschten Bereich, insbesondere vollständig, gefüllt bzw. ausgesteift wird und keinen unerwünschten Verzug aufweist.

Demgemäß wurden Verfahren zur Herstellung eines Verbundkörpers umfassend einen Grundkörper und eine mit dem Grundkörper verbundene Außenhülle gefunden, wobei der Grundkörper ein aus vorgeschäumten Schaumpartikeln erhältliches Partikelschaum-Formteil umfaßt und die Außenhülle einen einseitig oder an zwei gegenüberliegenden Seiten offenen Hohlkörper umfaßt, und wobei erfindungswesentlich ist, daß
- in einem Verfahrensschritt a) in einem Formwerkzeug durch Einbringung eines Wärmeträgermediums mit einer Temperatur von 105°C bis 180°C vorgeschäumte Schaumpartikel zu einem Partikelschaum-Formteil verschweißt werden, und das Partikelschaum-Formteil anschließend bei einer Formwerkzeugtemperatur von 40°C bis 100°C entformt wird,
- in einem nachfolgenden Verfahrensschritt b) das aus dem Formwerkzeug entnommene Partikelschaum-Formteil auf eine Temperatur von 5°C bis 39°C abgekühlt wird,
- in einem nachfolgenden Verfahrensschritt c) das abgekühlte Partikelschaum-Formteil durch eine offene Seite eines Hohlkörpers in diesen Hohlkörper eingebracht wird, und
- in einem nachfolgenden Verfahrensschritt d) der Hohlkörper mit dem darin befindlichen Partikelschaum-Formteil über einen Zeitraum von 0,5 h bis 24 h bei einer Temperatur von 40°C bis 100°C wärmegelagert wird, wobei zwischen dem Hohlkörper und dem Partikelschaum-Formteil eine kraftschlüssige Verbindung ausgebildet wird.

Des weiteren wurden nach diesen Verfahren erhältliche Verbundkörper, deren Verwendung und diese enthaltende Gegenstände gefunden.

Die erfindungsgemäßen Verfahren ermöglichen die Herstellung eines Verbundkörpers umfassend einen mit Partikelschaum gefüllten Hohlkörper, wobei keine unerwünschten Ablösungen des Partikelschaums von der Hohlkörperwand und keine unerwünschte Hohlraumbildung im Partikelschaum auftritt, so daß durch die stoßenergieabsorbierenden und elastischen Rückstelleigenschaften des Partikelschaums der Hohlkörper über den gesamten gewünschten Bereich, insbesondere vollständig, gefüllt bzw. ausgesteift wird und keinen unerwünschten Verzug aufweist.

Die erfindungsgemäßen Verfahren und Gegenstände werden im folgenden beschrieben.

Nach den erfindungsgemäßen Verfahren sind Verbundkörper herstellbar, die einen Grundkörper und eine mit dem Grundkörper verbundene Außenhülle umfassen, wobei der Grundkörper ein aus vorgeschäumten Schaumpartikeln erhältliches Partikelschaum-Formteil umfaßt und die Außenhülle einen einseitig oder an zwei gegenüberliegenden Seiten offenen Hohlkörper umfaßt.

Vorgeschäumte Schaumpartikel, sogenannte "Beads" oder "Minibeads", sind dem Fachmann grundsätzlich bekannt und in der Literatur beschrieben. Bevorzugte vorgeschäumte Schaumpartikel haben üblicherweise einen mittleren Partikeldurchmesser im Bereich von 0,5 mm bis 20 mm, bevorzugt 0,8 mm bis 15 mm, besonders bevorzugt 1 mm bis 10 mm. Die vorgeschäumten Schaumpartikel können grundsätzlich aus jedem Polymer hergestellt werden, welches zur Ausbildung von vorgeschäumten Schaumpartikeln geeignet ist. Die vorgeschäumten Schaumpartikel basieren bevorzugt auf expandiertem Polypropylen (EPP), expandiertem Polyethylen (EPE), expandiertem Polystyrol (EPS) oder expandiertem thermoplastischen Polyurethan (E-TPU). Die genannten Polymere können dabei sowohl als Homopolymere als auch als Copolymere mit bis zu 50 Gew.-%, bevorzugt bis zu 15 Gew.-%, besonders bevorzugt bis zu 10 Gew.-%, jeweils bezogen auf das Gesamtgewicht des jeweiligen Polymers, eines oder mehrerer Comonomere eingesetzt werden; insbesondere geeignete Copolymere sind Propylen-Ethylen-Copolymere und Styrol-Ethylen-Copolymere. Besonders bevorzugte Polymere, aus denen die vorgeschäumten Schaumpartikel bestehen, sind Propylenhomo- odercopolymere. Solche Propylenhomo- oder-copoiymere werden beispielsweise in EP-A 1 813 409 detailliert beschrieben. Die Schüttdichte der vorgeschäumten Schaumpartikel liegt je nach Art des Polymers und der Art der Vorschäumverfahren üblicherweise im Bereich von 10 kg/m³ bis 150 kg/m³, bevorzugt im Bereich von 15 kg/m³ bis 120 kg/m³, besonders bevorzugt im Bereich von 17 kg/m³ bis 100 kg/m³.

In einem ersten Verfahrensschritt a) der erfindungsgemäßen Verfahren erfolgt die Herstellung des vom Grundkörper umfaßten Partikelschaum-Formteils in der für die jeweiligen spätere Anwendung gewünschten Form, beispielsweise Quadern, Platten, Rundstäben oder auch komplexen Geometrien, wobei die Länge, Breite und Höhe dieser Partikelschaum-Formteile jeweils unabhängig voneinander in der Regel im Bereich von 0,1 cm bis 300 cm, bevorzugt 0,3 cm bis 200 cm, besonders bevorzugt 0,5 cm bis 100 cm, liegt. Die genauen Abmessungen des Partikelschaum-Formteils und die Abmessungen des Hohlkörpers sind - wie im folgenden noch beschrieben - aufeinander abzustimmen. Dieser erste Verfahrensschritt a) als solcher sowie die zur Durchführung geeigneten Vorrichtungen, beispielsweise Formteilautomaten, sind dem Fachmann bekannt und in der Literatur, beispielsweise in EP-A 1 813 409, auf die an dieser Stelle ausdrücklich verwiesen wird, beschrieben; die entsprechenden Vorrichtungen sind kommerziell verfügbar. Vorgeschäumte Schaumpartikel werden, bevorzugt pneumatisch, in ein Formwerkzeug, insbesondere in ein perforiertes Aluminium-, Stahl-, Sinteroder Kunststoffwerkzeug, eingebracht, bevorzugt pneumatisch komprimiert, und anschließend in diesem Formwerkzeug durch Einbringung eines Wärmeträgermediums, bevorzugt Heißdampf, wobei das Wärmeträgermedium eine Temperatur von 105°C bis 180°C, bevorzugt von 110°C bis 170°C, besonders bevorzugt von 115°C bis 160°C, aufweist, zu einem Partikelschaum-Formteil verschweißt. Nach dem eigentlichen Vorgang des Verschweißens muß das gebildete Partikelschaumstoff-Formteil in dem Formwerkzeug soweit abgekühlt werden, daß der Partikelschauminnendruck im Partikelschaum-Formteil von der sich beim Abkühlen verfestigenden Außenseite des Partikelschaum-Formteils aufgenommen werden kann. In der Regel ist die ausreichende Abkühlung des Partikelschaumstoff-Formteils dann gegeben, wenn die Formwerkzeugtemperatur auf 40°C bis 100°C, bevorzugt 60°C bis 90°C, besonders bevorzugt 75°C bis 85°C, abgesunken ist. Zum Abschluß des Verfahrensschritts a) wird das Partikelschaum-Formteil bei Erreichen der vorstehend genannten Formwerkzeugtemperatur entformt.

Die Partikelschaum-Formteile können an ihrer Außenseite mit Funktionselementen, beispielsweise Noppen, punktuellen oder rinnenförmigen Vertiefungen wie Sicken, Einbuchtungen, Aussparungen oder Einschnitten, versehen sein, die beispielsweise zur Einstellung gewünschter elastischer Eigenschaften, einer besseren Verbindung mit dem Hohlkörper oder einer bei der jeweiligen Anwendung gewünschten Funktion, beispielsweise als Wasserableitrinnen bei der Anwendung im Gartenmöbelbereich, dienen können (solche Funktionselemente werden bei der im folgenden noch beschriebenen Form des Außenquerschnitts des Partikelschaum-Formteils nicht berücksichtigt, was durch die dort verwendete Formulierung "im wesentlichen" zum Ausdruck gebracht wird).

Die Partikelschaum-Formteile können auch in den Schaumkörper eingelegte oder mit diesem verbundene Metall- oder Kunststoffelemente, die insbesondere quer zur Hauptexpansionsrichtung des Schaums angebracht sind, als Befestigungs- oder Aussteifungselemente enthalten. Das Einbringen solcher Befestigungs- oder Aussteifungselemente im Verfahrensschritt a) ist dem Fachmann bekannt.

In dem nachfolgenden Verfahrensschritt b) wird das aus dem Formwerkzeug entnommene Partikelschaum-Formteil auf eine Temperatur von 5°C bis 39°C, bevorzugt 10°C bis 35°C, besonders bevorzugt 15°C bis 30°C, abgekühlt (wobei diese Temperatur an dem Ort im Inneren des Partikelschaum-Formteils zu messen ist, der den größten Mindestabstand zur Außenseite des Partikelschaum-Formteils aufweist, da dies in der Regel der am langsamsten abkühlende Teil des Partikelschaum-Formteils ist). Dies kann im einfachsten Fall durch Lagerung bei Raumtemperatur erfolgen. Die Zeit, die für diese Abkühlung benötigt wird, kann in weiten Bereichen variieren, da sie u.a. von der Dicke des Partikelschaum-Formteils und der Umgebungstemperatur abhängt, liegt aber in der Regel im Bereich von 1 min bis 24 h, bevorzugt 2 min bis 16 h, besonders bevorzugt im Bereich von 5 min bis 12 h. Beim Abkühlen gemäß Verfahrensschritt b) entsteht in den Zellen des Partikelschaums ein gegenüber dem Umgebungsdruck verringerter Druck, beispielsweise weil im Inneren des Partikelschaum-Formteils befindlicher Dampf kondensiert, der zu einer Schwindung des Partikelschaum-Formteils führt. Dieses Schwindungsverhalten ist umso ausgeprägter, je niedriger die Dichte des Partikelschaum-Formteils ist, und je größer die Abkühlrate und die absolute Temperaturabsenkung im Verfahrensschritt b) sind. Die Schwindung des Partikelschaum-Formteils beim Abkühlen gemäß Verfahrensschritt b) beträgt entlang jeder der drei Raumrichtungen in der Regel 1 bis 20 %, insbesondere 2 bis 10 %. Das abgekühlte Partikelschaum-Formteil hat je nach Art des zugrunde liegenden Polymers und der Durchführung der Schäumverfahren in der Regel eine Dichte im Bereich von 10 kg/m³ bis 200 kg/m³, bevorzugt von 20 kg/m³ bis 180 kg/m³, besonders bevorzugt von 25 kg/m³ bis 150 kg/m³.

In dem nachfolgenden Verfahrensschritt c) der erfindungsgemäßen Verfahren wird das abgekühlte Partikelschaum-Formteil mindestens teilweise, bevorzugt vollständig, durch eine offene Seite eines Hohlkörpers in diesen Hohlkörper eingebracht. Der Hohlkörper wird dabei mindestens teilweise, bevorzugt vollständig, mit dem Partikelschaum-Formteil ausgefüllt. Damit dieses Einbringen grundsätzlich möglich ist, müssen zumindest die äußere Form des Partikelschaum-Formteils und die Öffnung sowie die Form des Innenraums des Hohlkörpers in dem Fachmann bekannter Weise, beispielsweise nach dem Schlüssel-Schloß-Prinzip, räumlich aufeinander abgestimmt sein. Sowohl die Öffnung des Hohlkörpers als auch die Form des Innenraums des Hohlkörpers müssen einerseits groß genug sein, um eine Einführung des Partikelschaum-Formteils zu ermöglichen, sollen aber andererseits nur geringstmöglich größer sein als das Partikelschaum-Formteil, um im Verfahrensschritt d) die Ausbildung einer bestmöglichen kraftschlüssigen Verbindung zu ermöglichen.

Dies ist erfindungsgemäß immer dann gewährleistet, wenn bei jeweils gleicher räumlicher Anordnung des Partikelschaum-Formteils und des Hohlkörpers zueinander das auf Entformungstemperatur befindliche Partikelschaum-Formteil beim Entformen gemäß Verfahrensschritt a) zu groß ist, um in den Hohlkörper eingebracht zu werden, nach dem Abkühlen gemäß Verfahrensschritt b) und der damit verbundenen Schwindung jedoch klein genug ist, um in den Hohlkörper eingebracht zu werden.

In einer bevorzugten Ausführungsform der erfindungsgemäßen Verfahren weist der Außenquerschnitt des Partikelschaum-Formteils senkrecht zur Einbringungsrichtung gemäß Verfahrensschritt c) und der Innenquerschnitt des Hohlkörpers senkrecht zur Einbringungsrichtung gemäß Verfahrensschritt c) im wesentlichen die gleiche Form auf. So ist es bevorzugt, Partikelschaum-Formteile, die einen im wesentlichen runden Außenquerschnitt aufweisen, in Hohlkörper mit ebenfalls im wesentlichen rundem Innenquerschnitt einzubringen, bzw. Partikelschaum-Formteile, die einen im wesentlichen rechteckigen Außenquerschnitt aufweisen, in Hohlkörper mit ebenfalls im wesentlichen rechteckigem Innenquerschnitt einzubringen. Die jeweiligen Querschnittsflächen können dabei entlang der Einbringungsrichtung gemäß Verfahrensschritt c) über die gesamte Länge des Partikelschaum-Formteils bzw. des Hohlkörpers identisch bleiben (z.B. bei entlang der Einbringungsrichtung gemäß Verfahrensschritt c) zylinderförmigen Partikelschaum-Formteilen und Hohlkörpern) oder aber sich verkleinern (z.B. bei sich in Einbringungsrichtung gemäß Verfahrensschritt c) konisch verjüngenden Partikelschaum-Formteilen und Hohlkörpern). Die Innenquerschnittsfläche des jeweiligen Hohlkörpers senkrecht zur Einbringungsrichtung gemäß Verfahrensschritt c) ist dabei größer zu wählen als die Außenquerschnittsfläche des jeweiligen Partikelschaum-Formteils senkrecht zur Einbringungsrichtung gemäß Verfahrensschritt c), da andernfalls ein Einbringen nicht möglich ist, bevorzugt aber um einen möglichst geringen Betrag größer, um im Verfahrensschritt d) eine möglichst gute kraftschlüssige Verbindung auszubilden.

Besonders bevorzugte erfindungsgemäße Verfahren, insbesondere für Partikelschaum-Formteile und Hohlkörper mit senkrecht zur Einbringungsrichtung gemäß Verfahrensschritt c) gleicher Form des Außenquerschnitts bzw. des Innenquerschnitts, sind solche, bei denen die Fläche des Außenquerschnitts des verschweißten Partikelschaum-Formteils senkrecht zur Einbringungsrichtung gemäß Verfahrensschritt c) beim Entformen gemäß Verfahrensschritt a) größer und nach dem Abkühlen gemäß Verfahrensschritt b) kleiner ist als die Fläche des Innenquerschnitts des Hohlkörpers senkrecht zur Einbringungsrichtung gemäß Verfahrensschritt c). Bei dieser Ausführungsform ist sowohl ein Einbringen des Partikelschaum-Formteils in den Hohlkörper gemäß Verfahrensschritt c) als auch das Ausbilden einer kraftschlüssigen Verbindung durch die Wärmelagerung gemäß Verfahrensschritt d) in besonders vorteilhafter Weise möglich.

Wie beschrieben ist die Öffnung sowie die Form des Innenraums des Hohlkörpers mit der äußeren Form des Partikelschaum-Formteils abzustimmen. Als Hohlkörper bevorzugt geeignet sind unter dieser Voraussetzung ein- oder beidseitig offene Hohlprofile mit runder, ovaler, dreieckiger, rechteckiger oder quadratischer Querschnittsform.

Bevorzugte Hohlkörper, welche beidseitig offene Hohlprofile sind, sind Rohre, insbesondere Rohre bestehend aus Metall, Kunststoff oder Glas. Bevorzugte Rohre haben eine runde, ovale, dreieckige, rechteckige oder quadratische Querschnittsform. Weitere bevorzugte Hohlkörper, welche beidseitig offene Hohlprofile sind, sind Schläuche, insbesondere Schläuche umfassend ein Metall-, Kunststoff-, Naturfaser- oder Glasgewebe oder ein Metall-, Kunststoff-, Naturfaser- oder Glasgeflecht. Weitere bevorzugte Hohlkörper, welche beidseitig offene Hohlprofile sind, sind Kunststoffschlauchfolien. Die im Gegensatz zu Rohren nicht starren Schläuche und Kunststoffschlauchfolien können eine im wesentlichen definierte Querschnittsform aufweisen (beispielsweise bei dickwandigen Metallgewebeschläuchen), welche dann bevorzugt rund, oval, dreieckig, rechteckig oder quadratisch ist, sie können aber auch eine veränderliche Querschnittsform besitzen (beispielsweise bei Kunststoffschlauchfolien, die prinzipiell zu flächigen Gebilden mit beliebig kleiner Innenquerschnittsfläche zusammengelegt werden können), wobei dann aber insbesondere durch das Einführen und Wärmelagern des Partikelschaum-Formteils gemäß Verfahrensschritten c) und d) eine definierte, im wesentlichen durch die Form des Partikelschaum-Formteils bestimmte Querschnittsform einnehmbar ist. Diese Rohre, Schläuche und Kunststoffschlauchfolien haben bevorzugt eine Länge im Bereich von 5 cm bis 5 m, besonders bevorzugt im Bereich von 20 cm bis 3 m, insbesondere im Bereich von 50 cm bis 1 m, und bevorzugte Innendurchmesser im Bereich von 1 bis 100 cm, besonders bevorzugt im Bereich von 5 bis 50 cm, insbesondere im Bereich von 10 bis 30 cm; die Wandstärken der Rohre und Schläuche bzw. die Dicken der Schlauchfolien sind je nach gewünschter Anwendung und eingesetztem Material innerhalb der dem Fachmann bekannten Bereichen frei wählbar. Bevorzugte Hohlkörper, welche einseitig offene Hohlprofile sind, sind die oben beschriebenen Rohre, Schläuche und Kunststoffschlauchfolien, jedoch mit der Maßgabe, daß diese einseitig verschlossen sind.

Weitere bevorzugte Hohlkörper sind schalen- oder wannenförmige Bauteile, besonders bevorzugt Kunststoffschalen oder-wannen, welche insbesondere im Spritzgießverfahren erhältlich sind.

Ganz besonders bevorzugte Hohlkörper sind beidseitig offene Naturfaser- oder Kunstfasergewebeschläuche, insbesondere aus Rattan, Polyrattan- bzw. Kunststoffrattangewebe, d.h. rattanähnlichen Geweben, die aus Polymersträngen auf Polyethylenbasis erhältlich, dem Fachmann an sich bekannt, in der Literatur beschrieben und kommerziell erhältlich sind. Diese beidseitig offenen Naturfaser- oder Kunstfasergewebeschläuche lassen sich beispielsweise erhalten, indem eine Bahn aus den entsprechenden Geweben entlang einer Seite mit der gegenüberliegenden Seite der gleichen Bahn verklebt, verschweißt oder vernäht wird.

Die Hohlkörper bzw. die sie umfassenden Außenhüllen können je nach gewünschter Anwendung an ihrer Außenseite als Dekor- oder Funktionsschicht ausgeführt sein. So können beispielsweise Hohlkörper aus Kunststoffgewebeschläuchen, insbesondere zu Schläuchen verschweißte Polyrattan- bzw. Kunststoffrattangewebe, als Außenhüllen der erfindungsgemäßen Verbundkörper eingesetzt werden, die in ihrem äußeren Erscheinungsbild den natürlichen Rattangeflechten stark ähneln und dementsprechend als Möbel bzw. Möbelkomponenten gut geeignet sind.

Die Hohlkörper können an ihrer Innenseite zur besseren Fixierung der Partikelschaum-Formteile mit Fixierungselementen, beispielsweise noppenförmigen Erhebungen, versehen sein (u.a. solche Fixierungselemente werden bei der eingangs beschriebenen Form des Innenquerschnitts des Hohlkörpers nicht berücksichtigt, was durch die dort verwendete Formulierung "im wesentlichen" zum Ausdruck gebracht wird).

In dem nachfolgenden Verfahrensschritt d) der erfindungsgemäßen Verfahren wird der Hohlkörper mit dem darin befindlichen Partikelschaum-Formteil über einen Zeitraum von 0,5 h bis 24 h, bevorzugt 0,75 h bis 18 h, besonders bevorzugt 1 h bis 12 h bei einer Temperatur von 40°C bis 100°C, bevorzugt 60°C bis 90°C, besonders bevorzugt 75°C bis 85°C, wärmegelagert, beispielsweise in einem handelsüblichen Wärmeschrank oder Trockentunnelofen. Während dieser Wärmelagerung findet durch eindiffundierende Luft ein Druckausgleich im Zellgefüge des Partikelschaum-Formteils statt und die beim Abkühlen gemäß Verfahrensschritt b) teilweise kollabierten Zellwände richten sich wieder auf. Dieser Vorgang führt zu einer Expansion des Partikelschaum-Formteils, so daß zwischen dem Partikelschaum-Formteil und dem Hohlkörper befindliche Luft verdrängt wird und sich das Partikelschaum-Formteil fest an die Innenwand des Hohlkörpers preßt, wodurch der Hohlkörper über den gesamten gewünschten Bereich, insbesondere vollständig, mit dem Partikelschaum-Formteil gefüllt bzw. von diesem ausgesteift wird, und zwischen dem Hohlkörper und dem Partikelschaum-Formteil eine kraftschlüssige Verbindung ausgebildet wird. Dieser Zustand bleibt auch bei einer nach dem Verfahrensschritt d) stattfindenden Abkühlung des Verbundkörpers erhalten, da sich die Zellwände des Partikelschaum-Formteils während der Wärmelagerung gemäß Verfahrensschritt d) ausreichend stabilisiert haben, um eine erneute Schwindung des Partikelschaum-Formteils zu verhindern.

Für manche Anwendungen ist es wünschenswert, eine besonders starke Anbindung des Partikelschaum-Formteils an die Außenhülle zu bewirken. In diesen Fällen kann die im Verfahrensschritt d) ausgebildete kraftschlüssige Verbindung durch eine stoffschlüssige Verbindung zwischen dem Hohlkörper und dem Partikelschaum-Formteil ergänzt werden. Dazu wird vor der Durchführung des Verfahrensschritts c) die Außenseite des Partikelschaum-Formteils und/oder die Innenseite des Hohlkörpers zumindest teilweise mit einem für die jeweiligen Materialien geeigneten und dem Fachmann grundsätzlich bekannten Klebstoff versehen.

Nach den vorstehend beschriebenen erfindungsgemäßen Verfahren sind die erfindungsgemäßen Verbundkörper umfassend einen Grundkörper und eine mit dem Grundkörper verbundene Außenhülle erhältlich, wobei der Grundkörper ein aus vorgeschäumten Schaumpartikeln erhältliches Partikelschaum-Formteil umfaßt und die Außenhülle einen einseitig oder an zwei gegenüberliegenden Seiten offenen Hohlkörper umfaßt, und wobei der Hohlkörper mit dem Partikelschaum-Formteil kraftschlüssig verbunden ist.

Bevorzugte Ausführungsformen der erfindungsgemäßen Verbundkörper wurden bereits im Rahmen der Beschreibung der erfindungsgemäßen Verfahren dargelegt und gelten entsprechend für die bevorzugten Ausführungen der erfindungsgemäßen Verbundkörper selbst.

Besonders bevorzugte erfindungsgemäße Verbundbauteile umfassen als Grundkörper ein Partikelschaum-Formteil, insbesondere ein quaderförmiges Partikelschaumformteil, welches aus vorgeschäumten Propylenhomo- oder -copolymerpartikeln hergestellt wurde, und welches mit einem als Außenhülle fungierenden Hohlkörper über die gesamte Fläche des Hohlkörpers kraftschlüssig verbunden ist, wobei der Hohlkörper von einem beidseitig offenen Naturfaser- oder Kunstfasergewebeschlauch, insbesondere einem Polyrattan- bzw. Kunststoffrattangewebeschlauch, gebildet wird.

Die nach den erfindungsgemäßen Verfahren erhältlichen Verbundkörper eignen sich insbesondere als elastische, stoßenergieabsorbierende, schalldämmende, wärmedämmende und/oder tragende Bauteile in Vorrichtungen aller Art, insbesondere in Möbeln, bevorzugt in der Witterung ausgesetzten Möbeln wie Gartenstühlen oder - bänken, oder Kraftfahrzeugen. Die nach den erfindungsgemäßen Verfahren erhältlichen Verbundkörper umfassend einen als Außenhülle fungierenden Naturfaser- oder Kunststoffgewebeschlauch, insbesondere einen Polyrattan- oder Kunststoffrattangewebeschlauch, eignen sich insbesondere als Sitz- oder Rückenlehnenelemente für Möbel, insbesondere für der Witterung ausgesetzte Möbel.

Die erfindungsgemäßen Verfahren ermöglichen die Herstellung eines Verbundkörpers umfassend einen mit Partikelschaum gefüllten Hohlkörper, wobei keine unerwünschten Ablösungen des Partikelschaums von der Hohlkörperwand und keine unerwünschte Hohlraumbildung im Partikelschaum auftritt, so daß durch die stoßenergieabsorbierenden und elastischen Rückstelleigenschaften des Partikelschaums der Hohlkörper über den gesamten gewünschten Bereich, insbesondere vollständig, gefüllt bzw. ausgesteift wird und keinen unerwünschten Verzug aufweist.

Anhand der Beispiele wird die Erfindung nachstehend näher erläutert.

### Beispiele:

### Beispiel 1:

Aus expandierten Polypropylen-Schaumpartikeln mit einem mittleren Partikeldurchmesser von 3,5 mm und einer Schüttdichte von 17,5 kg/m³, die von BASF SE unter der Marke Neopolen^{®} vertrieben werden, wurden in einem handelsüblichen Formteilautomaten und einer Zykluszeit von 3,0 min mittels Heißdampf mit einer Temperatur von 135°C quaderförmige Partikelschaum-Formteile hergestellt und bei einer Formwerkzeugtemperatur von 75°C entformt. Die Abmessungen der noch heißen Partikelschaum-Formteile beim Entformen betrugen 113 cm x 51,5 cm x 15,45 cm; die Dichte der Partikelschaumstoff-Formteile lag bei 27,45 kg/m³.

Anschließend wurden die Partikelschaumstoff-Formteile über einen Zeitraum von 10 h vollständig, d.h. auch im Inneren, auf eine Temperatur von 20°C abgekühlt. Aufgrund der dabei stattfindenden Schwindung besaßen die abgekühlten Partikelschaum-Formteile die Abmessungen 102 cm x 48 cm x 13,5 cm, wobei die Flächenmitten der Quader gegenüber den Kanten jeweils leicht eingesunken waren.

Aus einer Kunststoffrattangewebebahn wurde ein rechteckiges Stück mit den Abmessungen 246 cm x 50 cm herausgeschnitten, die beiden gegenüberliegenden kurzen Seiten mit einem Überlapp von 2 cm aufeinandergelegt und unter Ausbildung eines Hohlkörpers in Form eines beidseitig offenen Schlauchs verschweißt.

Anschließend wurde eines der separat hergestellten und abgekühlten Partikelschaum-Formteile mit einer der beiden kleinsten Flächen nach vorn vollständig in den Kunststoffrattangewebeschlauch geschoben (was mit dem direkt nach der Entformung erhaltenen noch heißen Partikelschaum-Formteil nicht möglich ist, da dieses zu groß ist).

Schließlich wurde der Kunststoffrattangewebeschlauch mit dem darin befindlichen Partikelschaum-Formteil über einen Zeitraum von 10 h bei einer Temperatur von 80°C in einem Wärmeschrank wärmegelagert, danach entnommen und wieder auf Raumtemperatur abgekühlt.

Das so erhaltene, mit dem Kunststoffrattangewebeschlauch als Außenhülle fest verbundene Partikelschaum-Formteil hatte eine Abmessung von 108 cm x 50 cm x 14 cm. Der erhaltene Verbundkörper war ohne unerwünschten Verzug vollständig mit dem Partikelschaum-Formteil ausgesteift, an keiner Stelle war eine Ablösung des Kunststoffrattangewebeschlauchs vom Partikelschaum-Formteil oder eine unerwünschte Hohlraumbildung im Partikelschaum zu beobachten.

Der so erhaltene Verbundkörper ist als tragende Sitzfläche für Gartenmöbel geeignet.

### Vergleichsbeispiel 1:

Ein exakt wie in Beispiel 1 beschrieben hergestellter Kunststoffrattangewebeschlauch wurde in ein Formwerkzeug mit den Formraumabmessungen1 10 cm x 50 cm x 15 cm eingelegt und mit expandierten Polypropylen-Schaumpartikeln der gleichen Art wie in Beispiel 1 beschrieben gefüllt. Anschließend wurde ebenfalls mit Heißdampf mit einer Temperatur von 135°C über einen Zeitraum von 3,0 min der Schäumvorgang durchgeführt und schließlich der so erhaltene Verbundkörper der Form entnommen und abgekühlt.

Der nach diesem Vergleichsbeispiel erhaltene Verbundformkörper wies deutlichen Verzug auf, der Kunststoffrattangewebeschlauch war an mehreren Stellen vom Partikelschaumstoff-Formkörper abgelöst und nicht vollständig ausgesteift.

## Patentansprüche

1. Verfahren zur Herstellung eines Verbundkörpers umfassend einen Grundkörper und eine mit dem Grundkörper verbundene Außenhülle, wobei der Grundkörper ein aus vorgeschäumten Schaumpartikeln erhältliches Partikelschaum-Formteil umfaßt und die Außenhülle einen einseitig oder an zwei gegenüberliegenden Seiten offenen Hohlkörper umfaßt, **dadurch gekennzeichnet, daß**
in einem Verfahrensschritt a) in einem Formwerkzeug durch Einbringung eines Wärmeträgermediums mit einer Temperatur von 105°C bis 180°C vorgeschäumte Schaumpartikel zu einem Partikelschaum-Formteil verschweißt werden, und das Partikelschaum-Formteil anschließend bei einer Formwerkzeugtemperatur von 40°C bis 100°C entformt wird,
in einem nachfolgenden Verfahrensschritt b) das aus dem Formwerkzeug entnommene Partikelschaum-Formteil auf eine Temperatur von 5°C bis 39°C abgekühlt wird,
in einem nachfolgenden Verfahrensschritt c) das abgekühlte Partikelschaum-Formteil durch eine offene Seite eines Hohlkörpers in diesen Hohlkörper eingebracht wird, und
in einem nachfolgenden Verfahrensschritt d) der Hohlkörper mit dem darin befindlichen Partikelschaum-Formteil über einen Zeitraum von 0,5 h bis 24 h bei einer Temperatur von 40°C bis 100°C wärmegelagert wird, wobei zwischen dem Hohlkörper und dem Partikelschaum-Formteil eine kraftschlüssige Verbindung ausgebildet wird.

2. Verfahren gemäß Anspruch 1, **dadurch gekennzeichnet, daß** bei jeweils gleicher räumlicher Anordnung des Partikelschaum-Formteils und des Hohlkörpers zueinander das auf Entformungstemperatur befindliche Partikelschaum-Formteil beim Entformen gemäß Verfahrensschritt a) zu groß ist, um in den Hohlkörper eingebracht zu werden, nach dem Abkühlen gemäß Verfahrensschritt b) jedoch klein genug ist, um gemäß Verfahrensschritt c) in den Hohlkörper eingebracht zu werden.

3. Verfahren gemäß Ansprüchen 1 bis 2, **dadurch gekennzeichnet, daß** der Außenquerschnitt des Partikelschaum-Formteils senkrecht zur Einbringungsrichtung gemäß Verfahrensschritt c) und der Innenquerschnitt des Hohlkörpers senkrecht zur Einbringungsrichtung gemäß Verfahrensschritt c) im wesentlichen die gleiche Form aufweisen.

4. Verfahren gemäß Ansprüchen 1 bis 3, **dadurch gekennzeichnet, daß** die Fläche des Außenquerschnitts des verschweißten Partikelschaum-Formteils senkrecht zur Einbringungsrichtung gemäß Verfahrensschritt c) beim Entformen gemäß Verfahrensschritt a) größer und nach dem Abkühlen gemäß Verfahrensschritt b) kleiner ist als die Fläche des Innenquerschnitts des Hohlkörpers senkrecht zur Einbringungsrichtung gemäß Verfahrensschritt c).

5. Verfahren gemäß Ansprüchen 1 bis 4, **dadurch gekennzeichnet, daß** die Außenseite des Partikelschaum-Formteils und/oder die Innenseite des Hohlkörpers zumindest teilweise mit einem Klebstoff versehen ist und im Verfahrensschritt d) zusätzlich eine stoffschlüssige Verbindung zwischen dem Hohlkörper und dem Partikelschaum-Formteil ausgebildet wird.

6. Verfahren gemäß Ansprüchen 1 bis 5, **dadurch gekennzeichnet, daß** der Hohlkörper ein ein- oder beidseitig offenes Hohlprofil mit runder, ovaler, dreieckiger, rechteckiger oder quadratischer Querschnittsform ist.

7. Verfahren gemäß Ansprüchen 1 bis 6, **dadurch gekennzeichnet, daß** der Hohlkörper ein Rohr bestehend aus Metall, Kunststoff oder Glas oder ein Schlauch umfassend ein Metall, Kunststoff-, Naturfaser- oder Glasgewebe oder -geflecht oder eine Kunststoffschlauchfolie ist.

8. Verfahren gemäß Ansprüchen 1 bis 7, **dadurch gekennzeichnet, daß** das Partikelschaum-Formteil im Verfahrensschritt a) aus vorgeschäumten Schaumpartikeln umfassend ein Propylenhomo- oder -copolymer hergestellt wird.

9. Verbundkörper umfassend einen Grundkörper und eine mit dem Grundkörper verbundene Außenhülle, wobei der Grundkörper ein aus vorgeschäumten Schaumpartikeln erhältliches Partikelschaum-Formteil umfaßt und die Außenhülle einen einseitig oder an zwei gegenüberliegenden Seiten offenen Hohlkörper umfaßt, und wobei der Hohlkörper mit dem Partikelschaum-Formteil kraftschlüssig verbunden ist, erhältlich nach Verfahren gemäß Ansprüchen 1 bis 8.

10. Verwendung der Verbundkörper gemäß Anspruch 9 als elastische, stoßenergieabsorbierende, schalldämmende, wärmedämmende und/oder tragende Bauteile in Möbeln oder Kraftfahrzeugen.

11. Möbel oder Kraftfahrzeuge, enthaltend als elastische, stoßenergieabsorbierende, schalldämmende, wärmedämmende und/oder tragende Bauteile Verbundkörper gemäß Anspruch 9.
